(19) Europäisches Patentamt
European Patent Office
Office européen des brevets

(11) **EP 2 105 600 B1**

(12) **FASCICULE DE BREVET EUROPEEN**

(45) Date de publication et mention
de la délivrance du brevet:
**18.05.2016 Bulletin 2016/20**

(51) Int Cl.:
***F02K 9/72*** *(2006.01)*

(21) Numéro de dépôt: **09156334.6**

(22) Date de dépôt: **26.03.2009**

(54) **Procédé de propulsion pyrotechnique avec modulation de poussée**

Verfahren für pyrotechnischen Antrieb mit Schubmodulation

Pyrotechnical propulsion method with thrust modulation

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **27.03.2008 FR 0851981**

(43) Date de publication de la demande:
**30.09.2009 Bulletin 2009/40**

(73) Titulaire: **HERAKLES**
**33185 Le Haillan (FR)**

(72) Inventeurs:
• **Perut, Christian**
**77310, Saint Fargeau Ponthierry (FR)**
• **Orlandi, Olivier**
**92160, Antony (FR)**

(74) Mandataire: **Le Roux, Martine et al**
**Cabinet Beau de Loménie**
**158, rue de l'Université**
**75340 Paris Cedex 07 (FR)**

(56) Documents cités:
**EP-A- 1 811 163       WO-A-00/58619**
**US-A- 3 182 451       US-A- 3 715 888**
**US-A- 5 119 627       US-A- 6 073 437**

**Description**

La présente invention a pour objet un procédé de propulsion (pyrotechnique) à propergol solide avec modulation de poussée. Ledit procédé est basé sur la génération de gaz propulsifs, résultant de la combustion d'un chargement de propergol solide.

Le domaine technique de l'invention est plus particulièrement celui de la modulation de la poussée dans un contexte de pilotage d'engins spatiaux, et plus particulièrement encore de pilotage de modules spatiaux d'atterrissage (dits atterrisseurs), généralement équipés de rétrofusées.

Le pilotage en vol des atterrisseurs consiste en un freinage (phase à poussée élevée) puis en un positionnement (phase à poussée réduite) le plus précis et doux possible de la charge utile au contact ou au-dessus du point d'impact désigné au sol. Une des particularités de ce pilotage est de nécessiter en permanence une poussée, même faible, afin de contrebalancer *a minima* la force d'attraction gravitationnelle.

Les procédés de propulsion des atterrisseurs doivent donc pouvoir générer une forte amplitude de poussée (phase de freinage à forte poussée suivie d'une phase de positionnement à faible, voire très faible poussée), une modulation de poussée rapide (afin de corriger au mieux la trajectoire, économiser le carburant, adapter au mieux la poussée), et présenter un encombrement, une complexité, et un coût, réduits, adaptés aux missions spatiales. Les procédés les mieux adaptés sont ceux qui permettent de générer une poussée continue *a minima* pouvant être augmentée à la demande, sur une plage d'amplitude maximale.

Il est connu que la loi de vitesse de combustion d'un propergol, dite loi Paul Vieille, peut s'écrire sous la forme :

$$Vc = a\ P^n$$

où Vc est la vitesse de combustion du propergol en mm/s
P la pression de la chambre de combustion en MPa
a le coefficient de pression
n l'exposant de pression.

L'équation de débit d'un moteur à propergol solide est par ailleurs connue sous la forme :

$$\text{Débit du propergol} = \text{débit passant par la tuyère} = q$$
$$q = \rho.Sc.Vc = P.Cd\ At$$

avec

q : débit massique du propulseur (kg/s)
$\rho$ : masse volumique du propergol (kg/m$^3$)
Sc : surface de propergol en combustion (m$^2$)
Vc : Vitesse de combustion (m/s)
P : pression dans la chambre de combustion (Pa)
Cd : coefficient de débit (s/m)
At : aire au col de la tuyère (m$^2$)

A noter que Cd ne dépend, en première approximation, que de la nature et de la température des gaz de combustion (il varie à l'inverse de la racine carré de la température dans la chambre de combustion) et ne dépend pas de la pression.

Ces équations montrent que :

- la courbe temporelle de débit (et de poussée) d'un moteur à propergol solide est prédéterminée par l'évolution de la surface de combustion du chargement de propergol (directement dépendante de la géométrie initiale du chargement) et par l'aire au col de la tuyère ;
- si l'on veut modifier à volonté le débit de gaz, résultant de la combustion d'un chargement de propergol solide dans une chambre de combustion munie d'une tuyère, il faut modifier la pression dans la chambre de combustion pour augmenter ou diminuer la vitesse de combustion du propergol.

Les moteurs à propergol solide présentent des poussées importantes pour des encombrements réduits. Leur simplicité de conception et leur disponibilité d'emploi sont aussi un avantage. L'homme du métier a donc développé des dispositifs de propulsion pyrotechnique utilisant des moteurs à propergol solide, avec modulation de poussée par vannage du col de la tuyère. Le dispositif, tel que décrit dans US 3,948,042, utilise ainsi un chargement de propergol solide débitant par l'intermédiaire d'une tuyère à section variable pilotée. La variation de l'aire au col de tuyère modifie la pression dans la chambre de combustion du propulseur, et par conséquent, le débit du propergol et la poussée du moteur. Pour les applications nécessitant des modulations de poussée, on choisit des propergols présentant un exposant de pression plutôt élevé de façon à obtenir une forte variation de vitesse de combustion pour une faible variation de l'aire au col de la tuyère. Les dispositifs associés à de tels procédés sont souvent complexes et onéreux car l'asservissement en position du moyen de vannage doit être très précis et rapide, tout en étant disposé dans le jet des gaz (chauds) de combustion passant par la tuyère. Ces dispositifs sont d'autant plus onéreux et complexes que le nombre de moyens de vannage des gaz est proportionnel au nombre de tuyères équipant l'engin à asservir.

Il faut préciser que le problème technique soulevé par la modulation de poussée des moteurs à propergol solide (en auto-combustion) est différent de celui de la modulation de poussée des moteurs à oxydant/réducteur séparés, dont la courbe de poussée initiale n'est pas prédéterminée mais fonction des rapports instantanés des produits réducteur et oxydant mis en présence, par injection pour au moins l'un d'eux, dans la chambre de combustion.

Des procédés de propulsion pyrotechnique dits hybrides, comprenant l'injection d'un oxydant tel que l'oxygène, le peroxyde d'azote, l'eau oxygénée ou plus communément le protoxyde d'azote, liquide ou gazeux, dans une chambre de combustion contenant un combustible solide, le plus souvent un polymère hydrocarboné, tel qu'un polyester, polycarbonate, polyéther, polyuréthane communément à base de polybutadiène, ont ainsi été décrits. Dans tous les cas, le produit réducteur contenu dans la chambre de combustion n'est pas suffisamment énergétique pour assurer une poussée à lui seul ; il est susceptible d'extinction si l'injection de l'oxydant est arrêtée.

Le brevet US 6,250,072 décrit ainsi l'injection de $N_2O$ dans une chambre d'un dispositif propulsif hybride contenant un combustible du type indiqué ci-dessus.

La demande de brevet WO 2004/085252 décrit une architecture de moteur hybride convenant à l'injection de protoxyde d'azote dans une chambre de combustion contenant un polyuréthane à base de polybutadiène.

La demande de brevet WO 00/58619 décrit, en ce qui concerne la variante de propulsion hybride, un assemblage de moteurs constitués de chambres de combustion contenant des chargements solides réducteurs ("solid fuel grain") connectées à un dispositif d'injection d'oxydant et de fluide d'allumage. La combustion des chargements solides n'est pas entretenue en l'absence d'injection de fluide oxydant. La réaction de combustion peut être allumée ou éteinte selon le débit d'oxydant. La modulation de poussée du dispositif est ainsi assurée par un assemblage de moteurs pouvant être allumés ou éteints à volonté.

Le brevet US 5,119,627 présente également une configuration de moteur hybride. Le terme "solid propellant" qualifie un matériau réducteur ("fuel grain") pouvant être constitué d'une résine hydrocarbonée.

Le brevet US 3,715,88 décrit aussi une architecture particulière pour un moteur hybride, comprenant une chambre de combustion contenant un chargement réducteur ("solid fuel") et un moyen d'injection d'oxydant liquide.

La propulsion hybride a l'avantage de stocker séparément des produits inertes, de permettre des phases de modulation, d'extinction voire de réallumage, et de présenter une bonne tolérance vis-à-vis des défauts du chargement. En revanche, la faible densité des combustibles solides employés pénalise la performance volumique (impulsion spécifique volumique) du moteur, et les vitesses d'ablation faibles du combustible nécessitent des chargements à grande surface de combustion pour obtenir des poussées importantes, et donc des chargements multi-perforés complexes pouvant conduire à des résidus importants. Ces deux points combinés se traduisent aussi par un faible coefficient de remplissage global du moteur, inadapté dans le contexte de l'invention. Ce type de procédé est plutôt employé pour des applications où l'on cherche des phases à poussée nulle ou quasi-nulle (i.e. avec arrêt d'injection de l'oxydant et extinction du combustible solide).

Le brevet US 6,250,072, déjà cité, présente aussi un mode de fonctionnement consistant à injecter de façon continue du $N_2O$ liquide ou gazeux, stocké à sa pression de vapeur, dans une chambre de combustion renfermant un chargement de semi-propergol ou de propergol. Ce mode de fonctionnement est utilisé pour obtenir un générateur de gaz à multi-allumages contrôlés. L'attention est portée, dans ce document, sur la décomposition de $N_2O$ dans la chambre de combustion (décomposition qui produit l'énergie nécessaire à l'allumage du chargement) et le fonctionnement d'une vanne permettant la dépressurisation rapide de la chambre et l'extinction du chargement.

Dans un autre domaine, la demande de brevet EP 1 811 163 décrit un dispositif de propulsion avec modulation de poussée. La propulsion principale est assurée par un moteur hypergolique (liquide), à réducteur (fuel type MMH) et oxydant (oxydant type NTO) séparés. L'injection dans la chambre de combustion d'hélium ou d'hydrogène permet de refroidir les parois de la chambre de combustion et d'augmenter la poussée du dispositif. L'augmentation de poussée est obtenue par le débit supplémentaire apporté par l'hélium ou l'hydrogène injecté. L'injection d'hélium ou d'hydrogène ne pilote ni le régime de combustion ni le débit du mélange oxydant-réducteur dans la chambre de combustion. Le brevet US 3,182,451 décrit un dispositif de propulsion avec modulation de poussée.

L'homme du métier est ainsi à la recherche de procédés et dispositifs de propulsion pyrotechnique à propergol solide, à poussée continue et modulable sur une forte amplitude, à fort taux de remplissage, susceptibles d'utiliser un propergol énergétique à fort exposant de pression, susceptible de s'exonérer de moyens de vannage des gaz éjectés, avec un temps de réponse court.

Il est du mérite des inventeurs d'avoir abordé le problème technique du pilotage de la poussée de moteurs à propergol solide en cherchant à s'affranchir des moyens de vannage, moyens classiquement utilisés à cette fin. Il est du mérite des inventeurs, dans ce contexte, de proposer un procédé performant convenant parfaitement pour, notamment, le freinage et le positionnement des atterrisseurs.

On a compris que le problème technique évoqué ci-dessus est particulièrement crucial dans le domaine de la conception et du pilotage des atterrisseurs spatiaux.

Dans le contexte rappelé ci-dessus, l'invention propose :

un procédé capable de délivrer une poussée continue, utilisant comme source d'énergie principale du propergol solide, en combustion dans une chambre de combustion avec tuyère(s), ladite poussée pouvant être, à la demande, modulée. De façon caractéristique, ladite poussée est modulée par l'injection d'au moins un fluide dans ladite chambre de combustion; et décrit aussi

des dispositifs, de conception simple, qui conviennent à la mise en oeuvre (de variantes) dudit procédé, notamment dans un contexte d'atterrisseurs.

L'invention concerne donc un procédé original de propulsion pyrotechnique avec modulation de poussée. Le procédé de l'invention consiste à piloter la combustion (plus précisément l'auto-combustion) d'un chargement de propergol solide, et donc le fonctionnement d'un moteur comprenant ledit propergol solide, par injection à la demande d'au moins un fluide dans la chambre de combustion (pendant le déroulement de ladite combustion, sans interruption de ladite combustion). L'effet de pilotage peut avantageusement être amplifié par la sélection d'un propergol à fort exposant de pression. Cet effet d'amplification est d'autant plus marqué que l'exposant de pression du propergol est proche de 1. On évite, cependant, par expérience, les exposants de pression supérieurs à 0,8, conduisant à des comportements balistiques difficilement maîtrisables.

L'objet de l'invention est ainsi un procédé de propulsion pyrotechnique (à propergol solide), à poussée continue, avec modulation de poussée, comprenant :

- l'auto-combustion d'un chargement de propergol solide dans la chambre de combustion d'un propulseur, et
- l'éjection des gaz générés par ladite auto-combustion,

procédé qui, de façon caractéristique, est mis en oeuvre avec un propergol solide présentant un exposant de pression supérieur à 0,5 et comprend, en outre, l'injection, à la demande, d'au moins un fluide dans ladite chambre de combustion ; ladite injection assurant au moins en partie, avantageusement à elle seule, le pilotage de la combustion (plus précisément de l'auto-combustion) dudit chargement de propergol et, par conséquent, ladite modulation de poussée (i.e. ladite injection permettant de piloter les paramètres, de fonctionnement du propulseur, la pression au sein de la chambre de combustion, le débit de gaz éjectés, la poussée générée).

Dans le cadre dudit procédé, la combustion d'un chargement de propergol solide est mise en oeuvre et on propose de moduler la poussée de façon originale : par injection, à la demande (en continu ou en discontinu, à débit constant ou pas), d'au moins un fluide dans la chambre de combustion (en activité). Selon la variante préférée de mise en oeuvre du procédé de l'invention, ladite injection dudit au moins un fluide suffit à assurer la modulation de poussée recherchée mais il ne saurait être totalement exclu du cadre de l'invention de mettre également en oeuvre un vannage au col de la (des) tuyère(s).

Ledit au moins un fluide est un gaz, un liquide ou un mélange d'au moins deux gaz, d'au moins deux liquides ou d'au moins un gaz et d'au moins un liquide.

L'injection dudit au moins un fluide, pour exercer la modulation de poussée, agit sur divers paramètres : la pression et la température au sein de la chambre de combustion, le débit de gaz éjectés, la masse molaire desdits gaz éjectés... L'action dudit au moins un fluide est précisé ci-après, en référence aux fluides injectés préférés.

Ledit au moins un fluide est avantageusement au moins un composant à faible masse molaire choisi parmi l'hydrogène (gazeux ou liquide cryogénique), l'hélium et leurs mélanges et/ou au moins un composant oxydant choisi parmi l'oxygène (gazeux ou liquide cryogénique), les substances stockables (*) à l'état liquide tels que le protoxyde d'azote, le peroxyde d'azote, le protoxyde d'hydrogène, l'acide nitrique et leurs mélanges. Le qualificatif "stockable" est précisé ci-après.

- Extrait du Rapport OTAN AGARD-AG-141-70 "Propergols Hautement Energétiques" par P. Tavernier, J. Boisson et B. Crampel : On peut considérer comme stockable une substance qui peut être conservée dans les conditions ambiantes pendant de longues périodes dans des réservoirs ne présentant pas d'aménagement particulier. Différents critères ont été proposés pour apprécier cette qualité. Ils font intervenir la température normale d'ébullition, la température de fusion, la température critique, la pression de vapeur aux températures ambiantes extrêmes envisagées, et la vitesse de décomposition chimique éventuelle, dans le cas fréquent de substances susceptibles de se dégrader. Parmi les nombreuses spécifications proposées pour définir le terme de « propergols liquides stockables », nous retiendrons celles proposées par GRELECKI et TANNEBAUM, Survey of current storable propellant, ARS journal, Vol. 32, 1962, n°8 : la température ambiante maximale étant fixée à 70°c, un ergol est dit stockable si sa température critique est supérieure à 70°c, si sa tension de vapeur, à cette température est inférieure à 35 bars, et si enfin, la vitesse de décomposition observée à 50°c reste inférieure à 1% par an. Pour la plupart des applications, la substance doit également être liquide jusqu'à -50°C.

On préconise particulièrement l'injection conjointe d'au moins un tel composant à faible masse molaire et d'au moins un tel composant oxydant ; on préconise tout particulièrement l'injection conjointe d'un tel composant à faible masse molaire et d'un tel composant oxydant.

On rappelle ci-après des connaissances de l'homme du métier, pertinentes pour expliquer *a posteriori* le fonctionnement très performant du procédé de l'invention. Les propergols solides étant, de par leurs compositions, toujours un peu sous oxygénés (notamment en raison de la présence d'un liant carboné, par exemple), les gaz de combustion desdits propergols solides sont toujours globalement réducteurs. Par ailleurs, les produits de combustion sont principalement composés d'espèces gazeuses (telles que de $H_2O$, $CO_2$, $NO_2$, $CO$, $H_2$), de particules (le plus souvent $Al_2O_3$) et de suies. Les températures de combustion s'échelonnent typiquement de 2000 K à plus de 3000 K selon les compositions. Il est par ailleurs connu de l'homme du métier que la poussée d'un moteur à propergol solide est d'autant plus élevée que la masse molaire des gaz éjectés est faible, que la température dans la chambre de combustion est élevée et que le débit est élevé.

Le principe physique non évident de modulation associé au procédé de l'invention est précisé ci-après (voir aussi une approche plus détaillée dans les exemples), en référence aux variantes de mise en oeuvre préférées dudit procédé. Il consiste donc à introduire, dans la chambre de combustion (en activité) :

- au moins un fluide tel un composant de faible masse molaire (tel que $H_2$ et/ou He) qui, chauffé dans ladite chambre de combustion (ceci induisant une baisse de la température dans ladite chambre de combustion), va contribuer à augmenter la pression dans la chambre de combustion, et/ou
- au moins un fluide tel un composant oxydant, afin d'augmenter la température dans la chambre de combustion, par réaction avec les
- gaz réducteurs excédentaires produits par le propergol et donc la pression dans ladite chambre de combustion. A noter que l'injection du (au moins un) composant oxydant contribue aussi par elle-même à augmenter le débit et donc la pression dans la chambre de combustion.

L'introduction conjointe d'(au moins) un composant de faible masse molaire et d'(au moins) un composant oxydant présente bien évidemment :

- l'intérêt conjugué d'augmenter la température dans la chambre de combustion (effet du (au moins un) composant oxydant injecté) et de porter ainsi à plus haute température ledit (au moins un) composant de faible masse molaire injecté(s), d'où un bénéfice au niveau de l'impulsion générée par le(s)dit(s) composant(s) à faible masse molaire,
- avec, en sus, une augmentation de la pression dans ladite chambre de combustion pour piloter la vitesse de combustion et donc le débit du propergol solide.

On comprend donc que l'introduction d'un fluide, préconisée selon l'invention, a pour effet d'augmenter globalement la pression dans le(la chambre de combustion du) propulseur par effet de température et/ou de débit. Dans le contexte de fort exposant de pression (> 0,5) du propergol préconisé, le débit du chargement de propergol augmente significativement en conséquence de l'élévation de pression. Ledit chargement de propergol réagit donc ainsi, de façon conséquente, à l'injection du fluide, contribue de même à augmenter la pression dans le propulseur et sa poussée, jusqu'à atteindre un nouveau point de fonctionnement. On force donc ainsi le propergol solide à rejoindre un point de fonctionnement à plus fort débit d'autant plus fort que l'exposant de pression du propergol est élevé.

Au-delà d'un certain débit de fluide d'au moins un composant de faible masse molaire, la chute de température (dans la mesure où ledit fluide est injecté généralement sans préchauffage) dans la chambre de combustion va devenir prédominante sur le gain de poussée lié à l'augmentation de pression. La poussée du moteur va alors commencer à diminuer. De même, lorsque la quantité du au moins un composant oxydant injecté devient excédentaire par rapport aux produits réducteurs générés par le propergol, une fraction du débit d'oxydant n'est pas consommée. Cette fraction contribue, d'une part, à augmenter le débit (donc à augmenter la poussée) et, d'autre part (dans la mesure où ledit composant est généralement injecté sans pré-chauffage), à refroidir la température de la chambre (i.e. à réduire la poussée). La poussée du moteur finit donc aussi par diminuer au-delà d'un débit seuil d'oxydant excédentaire. Au-delà d'un débit seuil de fluide, la poussée du moteur peut même devenir inférieure à celle obtenue avec la combustion de propergol seul. Ce fonctionnement n'est pas *a priori* recherché dans le cadre des applications de l'invention mais représente une possibilité de modulation de la poussée.

En général, compte tenu des propriétés des propergols solides usuels, le ratio de débit massique entre celui dudit au moins un fluide et celui dudit chargement de propergol est typiquement compris entre 0 et 2,5, de façon à être dans la gamme de modulation maximale du moteur sans conduire à une poussée inférieure à celle obtenue avec le propergol seul.

Ledit au moins un fluide, destiné à être injecté, est stocké en amont de la chambre de combustion, sous forme liquide ou gazeuse. Compte tenu du principe de l'invention consistant à injecter ledit au moins un fluide dans une chambre de combustion d'un propergol en combustion (chambre de combustion en activité), ledit au moins un fluide peut être injecté (est généralement injecté (voir ci-dessus)) sans préchauffage, à sa température de stockage. Il est éventuellement injecté, à l'état liquide, pulvérisé sous la forme de gouttelettes.

Selon une variante préférée, le propergol solide en cause est un propergol solide à fort exposant de pression, ayant un exposant de pression supérieur à 0,55, avantageusement compris entre 0,6 et 0,8.

Selon une variante également avantageuse, le propergol solide est choisi pour générer à lui seul une poussée significative, variante qui permet de limiter la quantité de fluide injecté dans les phases à faible poussée. En pratique, on choisit donc avantageusement un propergol présentant une impulsion spécifique supérieure à 220 s. Dès lors, la gamme de propergols susceptibles de répondre à l'application s'étend sans restriction à toutes les familles de propergols à haute impulsion spécifique, comme les compositions Butargols™, Nitrargols™, Azorgols®, Oxargols® (on peut se référer au document de Dauch et al. : "Snpe Matériaux Energetiques technologies for missile defence propulsion systems", 3rd AAAF International Conference on Missile Defence, Challenge in Europe, June 7-9, 2006, Seville, Spa*in).*

Un propergol (du type Nitrargol™) bien adapté est par exemple composé d'un liant contenant un ester nitrique et au moins un explosif nitré, avantageusement l'octogène et/ou l'hexogène, éventuellement chargé avec une charge métallique, avantageusement de l'aluminium. Un autre propergol bien adapté peut aussi être (du type Butargol™) composé d'un liant polyuréthane et d'au moins un explosif nitramine, avantageusement l'octogène et/ou l'hexogène, éventuellement chargé avec une charge métallique, avantageusement de l'aluminium.

Le procédé de l'invention peut notamment être mis en oeuvre pour le pilotage d'un engin spatial, plus particulièrement pour le freinage (phase à forte de poussée) et le positionnement (phase à poussée moyenne voire minimale) d'un atterrisseur.

Le procédé de l'invention, tel que décrit ci-dessus, peut être mis en oeuvre dans des dispositifs conventionnels (par exemple des dispositifs comprenant au moins une chambre de combustion et des moyens pour injecter un liquide dans ladite au moins une chambre de combustion) ou dans des dispositifs moins conventionnels (par exemple des dispositifs comprenant au moins une chambre de combustion et des moyens pour injecter du gaz dans ladite au moins une chambre de combustion). Les gaz et liquides en cause sont avantageusement des composants de faible masse molaire, stockés à l'état gazeux (He et/ou $H_2$) et/ou des composants oxydants, stockés à l'état liquide.

Tout dispositif convenant à la mise en oeuvre du procédé de l'invention peut tout à fait s'analyser comme un dispositif de génération de gaz propulsifs, à poussée modulable à la demande, éventuellement de façon multidirectionnelle. Il répond au cahier des charges pour la correction de trajectoires d'engins (missile, sonde...) volants et plus particulièrement pour les dispositifs de freinage et de positionnement d'atterrisseurs.

Le procédé de l'invention est mis en oeuvre dans des dispositifs pyrotechniques de propulsion, à poussée continue, avec modulation de poussée, qui comprennent au moins une chambre de combustion pour chargement de propergol solide (et convenant évidemment à la combustion dudit chargement en son sein), munie d'un allumeur et d'au moins une tuyère. Avantageusement, lesdits dispositifs comprennent en outre au moins un réservoir de gaz (réservoir pour avantageusement au moins un desdits composants à faible masse molaire, à l'état gazeux) sous pression relié, par l'intermédiaire d'une vanne commandée, à ladite au moins une chambre de combustion ou à au moins une desdites chambres de combustion.

Dans le cadre d'une variante, de tels dispositifs peuvent présenter une structure plus élaborée : ledit réservoir de gaz sous pression peut en outre être relié à au moins un autre réservoir de liquide (convenant pour contenir avantageusement un composant oxydant liquide) par l'intermédiaire d'un détendeur piloté (ou vanne commandée), ledit au moins un autre réservoir étant relié (par l'intermédiaire d'un clapet à ouverture commandé, par exemple) à ladite au moins une chambre de combustion ou à au moins une desdites chambres de combustion.

Dans le présent document, on appelle propulseur l'ensemble formé par une chambre de combustion, son chargement de propergol, ses moyens d'allumage et sa tuyère.

Le rôle de la liaison entre ledit au moins un réservoir (de gaz) sous pression et ledit au moins un autre réservoir (de liquide) est d'assurer une pression suffisante dans ledit au moins un autre réservoir contenant le liquide pour permettre, à l'ouverture selon la commande du détendeur et du clapet, l'écoulement de l'oxydant liquide dans ladite au moins une chambre de combustion.

Selon une variante, ladite au moins une tuyère de ladite au moins une chambre de combustion est à surface de col constant.

On remarque à ce stade la simplicité et la grande modularité des dispositifs convenant à la mise en oeuvre du procédé de l'invention. Ils permettent de moduler la poussée de plusieurs propulseurs en utilisant un assemblage de réservoir(s) sous pression et d'autres réservoirs de liquide (avantageusement oxydant liquide) afin de piloter au plus précis les paramètres de fonctionnement de chambres de combustion.

Pour ce qui concerne leur géométrie, les chargements pyrotechniques de propergol solide sont des chargements de l'art antérieur, que l'homme du métier sait choisir selon les règles de dimensionnement usuelles des chargements propulsifs. Avantageusement, lesdits chargements de propergol solide sont à canal central longitudinal orienté dans l'axe de l'injection du fluide et d'éjection des gaz propulsif. Lesdits chargements de propergol solide contenus dans les (n) chambres de combustion d'un dispositif de l'invention peuvent être éventuellement de compositions et de géométries différentes.

Les dispositifs pour la mise en oeuvre du procédé de l'invention incluent des moyens d'allumage desdits chargements pyrotechniques, moyens d'allumage aussi contenus dans l'état de l'art du domaine de la propulsion à propergol solide.

Lesdits au moins une vanne commandée, détendeur pilotable et clapet sont commandés par la centrale de pilotage de l'engin équipé du dispositif de l'invention qui les ouvre plus ou moins selon les niveaux ou les orientations de poussée requis.

Au moins un dispositif, tel que décrit ci-dessus, peut être utilisé, pour la mise en oeuvre du procédé de l'invention, dans un contexte de pilotage d'un engin spatial, plus particulièrement d'un module spatial d'atterrissage (dit attérisseur).

L'invention est maintenant décrite, de façon nullement limitative, en référence aux figures annexées. Un exemple de mise en oeuvre du procédé de l'invention est plus particulièrement décrit en référence auxdites figures.

La figure 1 montre les courbes de variation d'impulsion spécifique (Isv) de mélanges gaz de propergol + fluide, en fonction du ratio de débit et de la nature dudit fluide.

La figure 2 montre une vue schématique d'un dispositif convenant à la mise en oeuvre du procédé de l'invention.

La figure 3 montre une vue schématique d'un autre dispositif convenant à la mise en oeuvre du procédé de l'invention, dans une configuration élaborée.

La figure 4 montre l'agencement d'un dispositif convenant à la mise en oeuvre du procédé de l'invention (celui schématisé sur la figure 3) pour un fonctionnement en rétrofusée sur un module atterrisseur.

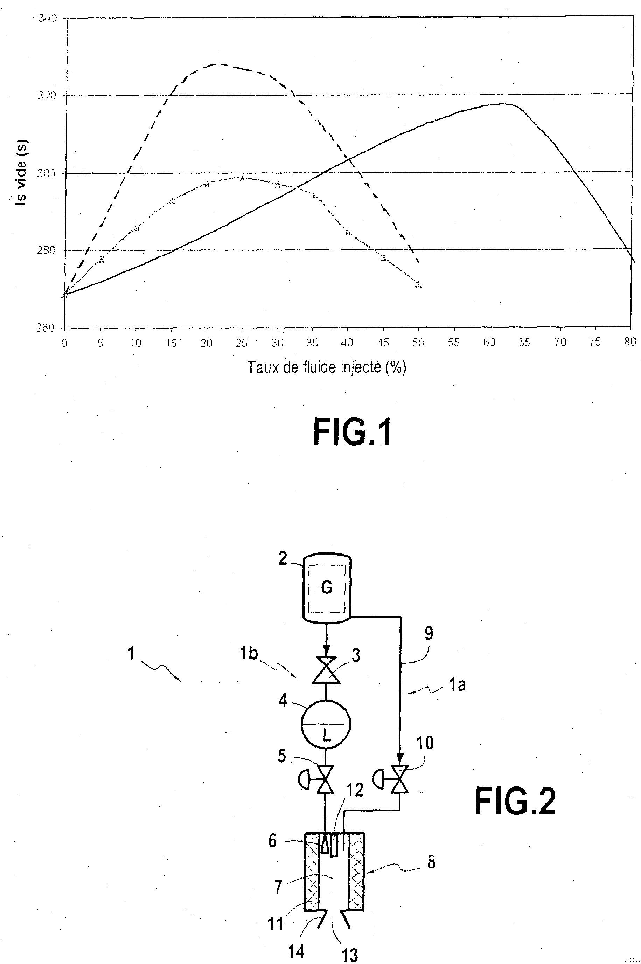

La figure 1 illustre le premier effet physique du procédé revendiqué consistant en l'augmentation de l'impulsion spécifique Isv (calculée, pour cet exemple, pour une pression dans la chambre de combustion de 70 bars (7 MPa), un rapport de détente de tuyère de 40, dans le vide), obtenue en fonction du ratio entre le débit de propergol type Butamite™ (liant PBHT + charge explosive nitramine + aluminium < 4%) et le débit de fluide injecté :

- composant oxydant liquide : $N_2O$ (courbe en trait plein : -),
- composant à faible masse molaire : $H_{2liquide}$ (dans les calculs, l'hydrogène est considéré liquide cryogénique à -253°C) (courbe en pointillés : ------) ou He (courbe en trait plein avec triangles : ——▲——▲——▲——).

Il est à noter que la variation d'impulsion spécifique est reliée aux propriétés physico-chimiques du mélange (Tc, nature de gaz) et se traduit par une modification du Cd des produits éjectés par le propulseur. L'impulsion spécifique augmente pour un mélange des gaz de propergol avec le fluide, jusqu'à ce que le débit dudit fluide devienne excédentaire.

Le tableau 1 ci-après quantifie la possibilité de modulation de poussée à travers un exemple précis utilisant du $N_2O$ comme fluide oxydant injecté, et montre l'intérêt de retenir un propergol à fort exposant de pression dans le cadre de l'invention. Deux propergols de même composition chimique ont été choisis, l'un avec un faible exposant de pression égal à 0,35, l'autre avec un fort exposant égal à 0,64. Deux calculs de poussée ont été réalisés pour une configuration de propulseur donnée (caractérisée par la surface en combustion du bloc de propergol Sc, l'aire au col de la tuyère At, le rapport de détente de la tuyère dans le vide), le premier cas sans injection d'oxydant, le deuxième cas avec un débit d'oxydant injecté permettant d'avoir une impulsion spécifique maximale. Afin de faciliter l'interprétation des résultats, les coefficients de pression de réglage de la vitesse des deux propergols ont été choisis pour obtenir la même poussée maximale pour le deuxième cas, simulant ainsi un critère de performance imposé pour une phase de freinage à forte poussée. Les résultats mettent en évidence l'intérêt de l'invention concernant la plage de poussée accessible. L'amplitude de modulation est plus importante pour le propergol à fort exposant de pression. On note que, pour une même poussée maximale, la poussée minimale dans le cas du propergol à fort exposant de pression est quatre fois plus petite que celle obtenue avec le propergol à plus faible exposant de pression.

TABLEAU 1

| | | Propergol seul Pas d'injection de fluide | | Propergol + injection de N$_2$O | |
|---|---|---|---|---|---|
| Exposant de pression | n | 0,35 | 0,64 | 0,35 | 0,64 |
| Coefficient de pression a | a [mm/s] | 2,51 | 1,05 | 2,51 | 1,05 |
| Débit fluide | [kg/s] | 0 | 0 | 3,37 | |
| Température dans la chambre de combustion | [K] | 1973 | 1972 | 3558 | |
| Impulsion spécifique (tuyère adaptée) | [s] | 253 | 251 | 304 | |
| Coefficient de débit | [s/m] | 7,1E-04 | 7,1E-04 | 6,2E-04 | |
| Pression dans la chambre de combustion | [MPa] | 3,8 | 1 | 20,4 | |
| Vitesse de combustion du propergol | [mm/s] | 4,00 | 4,00 | 7,2 | |
| Débit de propergol | [kg/s] | 1,13 | 0,3 | 2 | |
| Rapport de débits fluide/propergol | | 0,00 | 0,00 | 1,6 | |
| Poussée | [kN] | 2,8 | 0,7 | 15,5 | |
| Modulation Poussée Pmax/Pmin | | | | **5,54** | **22,1** |
| Caractéristiques du chargement de propergol et aire au col de la tuyère<br>Masse volumique du propergol = 1647 kg/m$^3$<br>Surface en combustion = 0,171 m$^2$<br>Aire au col tuyère At = 412 mm$^2$<br>Rapport de détente de la tuyère = 40<br>Pext = 0 bars (vide). | | | | | |

Le tableau 2 ci-après montre l'effet de la nature du au moins un fluide injecté sur le niveau de poussée maximum atteint. Quatre calculs de poussée ont été réalisés pour une configuration de propulseur donnée (caractérisée par la surface en combustion du bloc propergol Sc, l'aire au col de la tuyère At, le rapport de détente de la tuyère dans le vide), le premier cas sans injection d'oxydant, les cas suivants avec un fluide injecté constitué, respectivement, des composants N$_2$O, He, H$_2$ gazeux et un mélange N$_2$O/He. Pour chacun des cas considérés avec injection de fluide, le débit de fluide a été choisi de façon à obtenir le niveau d'impulsion spécifique maximum. La modulation de poussée, par rapport à la référence sans fluide additionnel, est de 22,1 pour l'injection du composant N$_2$O, 2,9 pour l'injection du composant He, 3,9 pour l'injection du composant H$_2$ gazeux, et de 51,0 pour l'injection d'un composant constitué d'un mélange 82,8% de N$_2$O avec 17,2% de He (% massique). Cet exemple illustre l'avantage amené par l'invention en terme de plage de modulation accessible dans un moteur à propergol solide. On note plus particulièrement l'intérêt d'injecter simultanément un oxydant liquide et une fraction de gaz léger type He, gaz léger pouvant servir à pressuriser le réservoir d'oxydant liquide.

Tableau 2

| Fluide | | Propergol seul | N$_2$O | He | H$_2$ | N$_2$O/He (82,8/17,2) |
|---|---|---|---|---|---|---|
| Débit fluide | [kg/s] | 0 | 3,4 | 0,2 | 0,19 | 7,73 |
| Température dans la chambre de combustion | [K] | 1972 | 3558 | 1214 | 1258 | 2975 |
| Impulsion spécifique (tuyère adaptée) | [s] | 251 | 304 | 250 | 334 | 322 |
| Coefficient de débit | [s/m] | 7,1E-04 | 6,2E-04 | 6,4E-04 | 5,5E-04 | 5,4E-04 |
| Pression dans la chambre de combustion | [MPa] | 1 | 20,4 | 2,7 | 3,7 | 50,7 |

(suite)

| Fluide | | Propergol seul | N$_2$O | He | H$_2$ | N$_2$O/He (82,8/17,2) |
|---|---|---|---|---|---|---|
| Vitesse de combustion du propergol | [mm/s] | 1,0 | 7,20 | 2 | 2,4 | 12,9 |
| Débit de propergol | [kg/s] | 0,3 | 2 | 0,56 | 0,68 | 3,63 |
| Rapport de débits fluide/propergol | | 0,00 | 1,66 | 0,36 | 0,28 | 2,13 |
| Poussée | [kN] | 0,7 | 15,5 | 2 | 2,7 | 36 |
| Modulation Poussée Pmax/Pmin | | | **22,1** | **2,9** | **3,9** | **51,4** |

| | |
|---|---|
| Rapport de détente de la tuyère (adaptée) | 40 |
| masse volumique du propergol | 1647 kg/m$^3$ |
| Surface en combustion | 0,171 m$^2$ |
| Aire au col de la tuyère | 412 mm$^2$ |
| Exposant de pression du propergol n | 0,64 |
| Coefficient de pression a | 1,05 mm/s |

On montre sur la figure 2 un dispositif **1** convenant à la mise en oeuvre du procédé de l'invention composé d'un réservoir de gaz sous pression **2,** de l'hélium par exemple, relié, par l'intermédiaire d'un détendeur pilotable **3,** à un réservoir d'oxydant **4,** du N$_2$O liquide par exemple, lui-même relié *via* un clapet commandé **5** à une canne d'injection **6** dans la chambre de combustion **7** d'un propulseur **8.** Une canalisation **9** relie aussi le réservoir de gaz sous pression **2** à la chambre de combustion **7** *via* une vanne commandée **10.** Le propulseur **8** comprend un chargement de propergol solide **11** à canal (l'intérieur du canal constituant la chambre de combustion **7),** un moyen d'allumage **12** et une tuyère **13** munie d'un divergent **14.**

Ledit dispositif **1** est particulièrement intéressant en ce qu'il permet la mise en oeuvre du procédé de l'invention selon trois variantes :

- une première variante comprenant l'injection du gaz G *via* la vanne **10** (pour la mise en oeuvre d'une telle première variante, ledit dispositif **1** aurait pu se limiter, entre le réservoir **2** et le propulseur **8,** à la canalisation **9** équipée de ladite vanne **10.** Un tel dispositif "élémentaire" (dispositif de l'invention) est référencé **1a** sur la figure 2) ;
- une seconde variante comprenant l'injection du liquide L *via* le clapet **5** et la canne d'injection **6 ;** ledit liquide L étant injecté sous la pression du gaz G (pour la mise en oeuvre d'une telle seconde variante, ledit dispositif **1** aurait pu se limiter, entre le réservoir **2** et le propulseur **8,** à la canalisation équipée successivement du détenteur **3,** du réservoir **4,** du clapet **5** et de ladite canne d'injection **6.** Un tel dispositif "élémentaire" est référencé **1b** sur la figure 2) ;
- une troisième variante comprenant les deux injections (conjointes ou non, avantageusement conjointes) dudit gaz G (*via* la vanne **10**) et dudit liquide L (*via* le clapet **5** et la canne d'injection **6**) (pour la mise en oeuvre de ladite troisième variante, les deux lignes du dispositif **1 ("1=1a+1b")** sont utilisées).

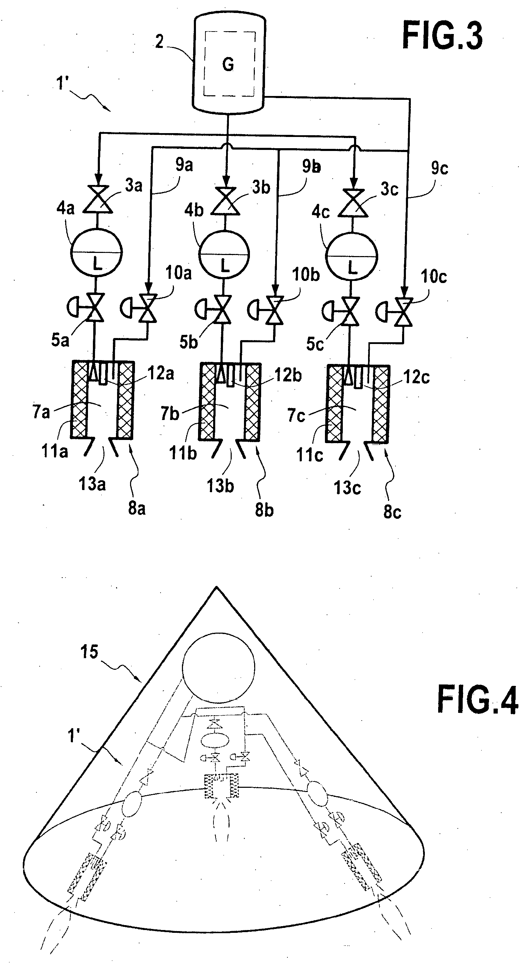

La figure 3 montre un dispositif **1'** convenant à la mise en oeuvre du procédé de l'invention constitué d'un réservoir de gaz sous pression **2** relié par l'intermédiaire de trois détendeurs pilotables **3a,3b,3c** à trois réservoirs d'oxydant liquide **4a,4b,4c,** eux-mêmes chacun reliés par l'intermédiaire d'un clapet commandé **5a, 5b, 5c** à une chambre de combustion **7a, 7b, 7c.** Trois canalisations **9a, 9b, 9c** relient aussi le réservoir de gaz sous pression **2,** *via* une vanne commandée **10a, 10b**, **10c,** à chacune des trois chambres de combustion **7a, 7b, 7c** des propulseurs **8a,8b,8c.** On a référencé **11a,11b,11c, 12a,12b,12c** et **13a,13b,13c,** sur cette figure 3, respectivement, les chargements de propergol solide, les moyens d'allumage et les tuyères.

En référence à la figure 4, on montre comment le dispositif **1'** (montré sur la figure 3) est particulièrement adapté pour être monté sur une structure d'atterrisseur **15,** généralement de forme globalement conique, triédrique ou hémisphérique. Le nombre de propulseurs montrés sur cette figure est purement illustratif et nullement limitatif.

**Revendications**

1. Procédé de propulsion pyrotechnique, à poussée continue, avec modulation de poussée, comprenant :

   - l'auto-combustion d'un chargement de propergol solide (11 ; 11a,11b,11c) dans la chambre de combustion (7 ; 7a,7b,7c) d'un propulseur (8 ; 8a,8b,8c), et
   - l'éjection des gaz générés par ladite auto-combustion, et comprenant , en outre, l'injection, à la demande, d'au moins un fluide (G et/ou L) dans ladite chambre de combustion (7 ; 7a,7b,7c) ; ladite injection assurant, au moins en partie, avantageusement à elle seule, le pilotage de la combustion dudit chargement de propergol et, par conséquent, ladite modulation de poussée; **caractérisé en ce qu'**il est mis en oeuvre avec un propergol solide présentant un exposant de pression supérieur à 0,5.

2. Procédé selon la revendication 1, **caractérisé en ce que** ledit au moins un fluide (G et/ou L) est au moins un composant à faible masse molaire choisi parmi l'hydrogène, gazeux ou liquide cryogénique, l'hélium et leurs mélanges et/ou au moins un composant oxydant choisi parmi l'oxygène, gazeux ou liquide cryogénique, les substances stockables à l'état liquide telles le protoxyde d'azote, le peroxyde d'azote, le protoxyde d'hydrogène, l'acide nitrique et leurs mélanges.

3. Procédé selon la revendication 1 ou 2, **caractérisé en ce que** le ratio de débit massique dudit au moins un fluide (G et/ou L) et dudit chargement de propergol solide (11 ; 11a,11b,11c) est compris entre 0 et 2,5.

4. Procédé selon l'une quelconque des revendications 1 à 3, **caractérisé en ce que** ledit au moins un fluide injecté est stocké sous forme liquide ou gazeuse.

5. Procédé selon l'une quelconque des revendications 1 à 4, caractérisé en que ledit au moins un fluide (G et/ou L) est injecté à sa température de stockage.

6. Procédé selon l'une quelconque des revendications 1 à 5, **caractérisé en ce que** ledit propergol solide présente un exposant de pression compris entre 0,6 et 0,8.

7. Procédé selon l'une quelconque des revendications 1 à 6, **caractérisé en ce que** ledit propergol solide présente une impulsion spécifique supérieure à 220 s.

8. Procédé selon l'une quelconque des revendications 1 à 7, **caractérisé en ce qu'**il est mis en oeuvre pour le pilotage d'un engin spatial, plus particulièrement le freinage et le positionnement d'un atterrisseur (15).

9. Procédé selon l'une quelconque des revendications 1 à 8, **caractérisé en ce qu'**il est mis en oeuvre dans un dispositif (1a ; 1 ; 1') comprenant au moins une chambre de combustion (7 ; 7a,7b,7c) pour chargement de propergol solide (11;11a,11b,11c), munie d'un allumeur (12 ; 12a,12b,12c) et d'au moins une tuyère (13 ; 13a,13b,13c), et au moins un réservoir (2) de gaz sous pression relié par l'intermédiaire d'une vanne commandée (10 ; 10a,10b 10c) à ladite chambre de combustion (7) ou à au moins une desdites chambres de combustion (7a,7b,7c).

10. Procédé selon la revendication 9, **caractérisé en ce que** ledit au moins un réservoir sous pression (2) est aussi relié par l'intermédiaire d'une vanne commandée (3 ; 3a,3b,3c) à au moins un autre réservoir (4 ; 4a,4b,4c) de liquide (L), ledit au moins un autre réservoir (4 ; 4a,4b,4c) étant relié à ladite chambre de combustion (7) ou à au moins une desdites chambres de combustion (7a,7b,7c).

11. Procédé selon la revendication 9 ou 10, **caractérisé en ce que** ladite au moins une tuyère (13 ; 13a,13b,13c) de ladite au moins une chambre de combustion (7 ; 7a,7b,7c) est à surface de col constant.

**Patentansprüche**

1. Pyrotechnisches Antriebsverfahren mit kontinuierlichem Schub mit Schubmodulation, umfassend:

   - die Selbstentzündung einer Ladung von festem Propergol (11; 11a, 11 b, 11 c) in der Brennkammer (7; 7a, 7b, 7c) eines Triebwerks (8; 8a, 8b, 8c) und
   - die Abgabe der durch die Selbstentzündung erzeugten Gase und umfassend:

- ferner auf Anforderung das Einspritzen mindestens eines Fluids (G und/oder L) in die Brennkammer (7; 7a, 7b, 7c), wobei das Einspritzen zumindest teilweise vorteilhafterweise alleine die Steuerung der Verbrennung der Ladung von Propergol und folglich die Schubmodulation gewährleistet,

**dadurch gekennzeichnet, dass** es mit einem festen Propergol eingesetzt wird, das einen Druckexponenten über 0,5 aufweist.

2. Verfahren nach Anspruch 1, **dadurch gekennzeichnet, dass** das mindestens eine Fluid (G und/oder L) mindestens eine Komponente mit geringer Molmasse ist, die unter Wasserstoff, gasförmig oder kryogene Flüssigkeit, Helium und ihren Gemischen ausgewählt ist, und/oder mindestens eine oxydierende Komponente ist, die unter Sauerstoff, gasförmig oder kryogene Flüssigkeit, den im flüssigen Zustand lagerbaren Substanzen, wie Stickstoff-Protoxid, Stickstoff-Peroxid, Wasserstoff-Protoxid, Salpetersäure und ihren Gemischen ausgewählt ist.

3. Verfahren nach Anspruch 1 oder 2, **dadurch gekennzeichnet, dass** das die Flussrate mindestens eines Fluids (G und/oder L) und der Ladung von festem Propergol (11; 11 a, 11 b, 11 c) zwischen 0 und 2,5 beträgt.

4. Verfahren nach einem der Ansprüche 1 bis 3, **dadurch gekennzeichnet, dass** das mindestens eine eingespritzte Fluid in flüssiger oder gasförmiger Form gelagert wird.

5. Verfahren nach einem der Ansprüche 1 bis 4, **dadurch gekennzeichnet, dass** das mindestens eine Fluid (G und/oder L) mit seiner Lagerungstemperatur eingespritzt wird.

6. Verfahren nach einem der Ansprüche 1 bis 5, **dadurch gekennzeichnet, dass** das feste Propergol einen Druckexponenten zwischen 0,6 und 0,8 aufweist.

7. Verfahren nach einem der Ansprüche 1 bis 6, **dadurch gekennzeichnet, dass** das feste Propergol einen spezifischen Impuls über 220s aufweist.

8. Verfahren nach einem der Ansprüche 1 bis 7, **dadurch gekennzeichnet, dass** es für die Steuerung eines Raumfahrzeugs, insbesondere das Bremsen und Positionieren eines Landers (15) eingesetzt wird.

9. Verfahren nach einem der Ansprüche 1 bis 8, **dadurch gekennzeichnet, dass** es in einer Vorrichtung (1a; 1; 1') eingesetzt wird, umfassend mindestens eine Brennkammer (7; 7a, 7b, 7c) für eine Ladung von festen Propergol (11; 11 a, 11 b, 11c), die mit einem Zünder (12; 12a, 12b, 12c) und mindestens einem Rohr (13; 13a, 13b, 13c) versehen ist, und mindestens einen Druckgasbehälter (2), der mit Hilfe eines gesteuerten Ventils (10; 10a, 10b, 10c) mit der Brennkammer (7) oder mindestens einer der Brennkammern (7a, 7b, 7c) verbunden ist.

10. Verfahren nach Anspruch 9, **dadurch gekennzeichnet, dass** der mindestens eine Druckbehälter (2) auch mit Hilfe eines gesteuerten Ventils (3; 3a, 3b, 3c) mit mindestens einem weiteren Behälter (4; 4a, 4b, 4c) von Flüssigkeit (L) verbunden ist, wobei der mindestens eine weitere Behälter (4; 4a, 4b, 4c) mit der Brennkammer (7) oder mindestens einer der Brennkammern (7a, 7b, 7c) verbunden ist.

11. Verfahren nach Anspruch 9 oder 10, **dadurch gekennzeichnet, dass** das mindestens eine Rohr (13; 13a, 13b, 13c) der mindestens einen Brennkammer (7; 7a, 7b, 7c) eine konstante Halsfläche hat.

**Claims**

1. Continuous thrust pyrotechnical propulsion method, with thrust modulation comprising:

- self-combustion of a charge of solid propellant (11; 11a, 11b, 11c) in the combustion chamber (7; 7a, 7b, 7c) of a thruster (8; 8a, 8b, 8c), and
- ejection of the gases generated by said self-combustion,

and further comprising injection on demand of at least one fluid (G and/or L) into said combustion chamber (7; 7a, 7b, 7c); said injection at least partly ensuring, advantageously alone, the control of the combustion of said propellant charge and, therefore said thrust modulation;
**characterized in that** it is carried out with a solid propellant having a pressure exponent of more than 0.5.

**2.** The method according to claim 1, **characterized in that** said at least one fluid (G and/or L) is at least one component with a low molar mass selected from hydrogen, gaseous hydrogen or cryogenic liquid hydrogen, helium and mixtures thereof and/or at least one oxidizing component selected from among oxygen, gaseous oxygen or cryogenic liquid oxygen, substances which may be stored in the liquid state such as nitrous oxide, nitrogen peroxide, hydrogen monoxide, nitric acid and mixtures thereof.

**3.** The method according to claim 1 or 2, **characterized in that** the mass flow rate ratio of said at least one fluid (G and/or L) and of said solid propellant charge (11; 11a, 11b, 11c) is comprised between 0 and 2.5.

**4.** The method according to any one of claims 1 to 3, **characterized in that** said at least one injected fluid is stored in liquid or gas form.

**5.** The method according to any one of claims 1 to 4, **characterized in that** said at least one fluid (G and/or L) is injected at its storage temperature.

**6.** The method according to any one of claims 1 to 5, **characterized in that** said solid propellant has a pressure exponent comprised between 0.6 and 0.8.

**7.** The method according to any one of claims 1 to 6, **characterized in that** said solid propellant has a specific impulse greater than 220 seconds.

**8.** The method according to any one of claims 1 to 7, **characterized in that** it is carried out for controlling a space craft, more particularly for slowing down and positioning a lander (15).

**9.** The method according to any one of claims 1 to 8, **characterized in that** it is carried out in a device (1a; 1; 1') comprising at least one combustion chamber (7; 7a, 7b, 7c) for a solid propellant charge (11; 11a, 11b, 11c), provided with an igniter (12; 12a, 12b, 12c) and with at least one nozzle (13; 13a, 13b, 13c), and at least one pressurized gas tank (2) connected via a controlled valve (10; 10a, 10b, 10c) to said combustion chamber (7) or to at least one of said combustion chambers (7a, 7b, 7c).

**10.** The method according to claim 9, **characterized in that** said at least one pressurized tank (2) is also connected via a controlled valve (3; 3a, 3b, 3c) to at least one other tank (4; 4a, 4b, 4c) of liquid (L), said at least one other tank (4; 4a, 4b, 4c) being connected to said combustion chamber (7) or to at least one of said combustion chambers (7a, 7b, 7c).

**11.** The method according to claim 9 or 10, **characterized in that** said at least one nozzle (13; 13a, 13b, 13c) of said at least one combustion chamber (7; 7a, 7b, 7c) has a constant throat surface area.

FIG.1

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3948042 A
- US 6250072 B
- WO 2004085252 A
- WO 0058619 A
- US 5119627 A
- US 371588 A
- EP 1811163 A
- US 3182451 A

**Littérature non-brevet citée dans la description**

- **P. TAVERNIER ; J. BOISSON ; B. CRAMPEL.** Propergols Hautement Energétiques. *Extrait du Rapport OTAN AGARD-AG-141-70*
- **GRELECKI ; TANNEBAUM, SURVEY.** *ARS journal,* 1962, vol. 32 (8
- **DAUCH et al.** Snpe Matériaux Energetiques technologies for missile defence propulsion systems. *3rd AAAF International Conference on Missile Defence, Challenge in Europe,* 07 Juin 2006